# EUROPÄISCHE PATENTSCHRIFT

(11) **EP 3 210 688 B1**
(45) Veröffentlichungstag und Bekanntmachung des Hinweises auf die Patenterteilung: **23.05.2018**
(21) Anmeldenummer: 16400003.6
(22) Anmeldetag: 24.02.2016
(51) Int. Cl.: B21D 53/28, B21D 28/16, B21K 1/30, B23P 15/14, B23F 17/00, F16D 23/02

(54) **VERFAHREN UND WERKZEUG ZUR HERSTELLUNG VON BLECHTEILEN FÜR GETRIEBESYNCHRONISATION**
METHOD AND TOOL FOR THE PRODUCTION OF METAL COMPONENTS FOR GEAR SYNCHRONISATION
PROCEDE ET OUTIL DESTINES A FABRIQUER DES PIECES EN TOLE POUR LA SYNCHRONISATION DE BOITE DE VITESSES

(43) Veröffentlichungstag der Anmeldung: 30.08.2017
(73) Patentinhaber: ATF Auer Teilefertigung GmbH, 08280 Aue (DE)
(72) Erfinder: Tautenhahn, Jens, 08299 Schneeberg (DE); Leonhardt, Stephan, 08321 Zschorlau (DE)
(74) Vertreter: Grosse, Ulrich

(56) Entgegenhaltungen:
- EP-A1- 2 025 430
- EP-A1- 2 982 456
- DE-A1-102009 029 756

## Beschreibung

### Patentbeschreibung

Die Erfindung geht von dem im Oberbegriff des Patentanspruches 1 definierten Herstellungsverfahren und dem im Oberbegriff des Patentanspruches 6 definierten Werkzeug zur Durchführung dieses Verfahrens zur Herstellung dieser funktionsbezogen ausgebildeten Blechteile aus.
Blechteile für die Getriebesynchronisation sind Synchronringe, Kupplungskörper und Kupplungsscheiben, die mit radial gerichteten evolventenförmigen Außenzähnen und mit axial gerichtet sowie stirnseitig an diesen Außenzähnen angeordneten Zahn-Dachformen ausgestattet sind.
Dabei soll das Herstellungsverfahren mit einer geringen Anzahl Verfahrensschritte durchführbar und das benötigte Werkzeug mit einer verfahrensabhängig geringen Anzahl Werkzeugstufen ausgestattet sein.
Synchronringe, Kupplungskörper und Kupplungsscheiben haben in den Synchronisationssystemen der Fahrzeuggetriebe die Aufgabe, die unterschiedlichen Drehzahlen des zu schaltenden Gangrades und der Welle aneinander anzugleichen.
Dies bedingt eine bestimmte Maßgenauigkeit sowie eine Gratfreiheit und eine gleichbleibend gute Ausformung und Materialfestigkeit der evolventenförmigen Außenzähne und der Ausbildung der Zahn-Dachformen sowie der Hinterlegung an diesen. Neben höchsten Anforderungen an die Ausführungsqualität dieser Funktionsteile in Fahrzeuggetrieben von PKWs werden auch mittlere Ausführungsqualitäten bei bestimmten Nutzfahrzeugarten, die beispielsweise in der Land- und Forstwirtschaft zum Einsatz kommen, ausreichend sein.

Beispiele für den Stand der Technik von Verfahrens- und Werkzeugausbildungen zur Herstellung der Zahn-Dachformen und der Hinterlegungen sind nachfolgend benannte Erfindungsanmeldungen.

In
- DE 10 2005 084 237 A1 und
- DE 42 00 418 01
ist das Herstellungsverfahren ein aufwendiges Fräsen, welches mit einem entsprechend ausgebildeten Sonderfräser als Werkzeug erfolgt.
Weiterhin werden in
- DE 10 2005 053 989 B4
Blechteil-Ausbildungen vorgeschlagen, wobei die Zahn-Dachformen und Hinterlegungen durch Stoßen und Schneiden in einem kurzen Blechstreifen eingearbeitet werden. Der Blechstreifen wird nachfolgend zu einem Ring gebogen, wobei die beiden Blechstreifenenden mittels vorgefertigten Fugen fest verbunden sind.
Die Herstellung der Außenverzahnung an Teilen ohne eine ergänzende Anbringung von Zahn-Dachformen ist in
- EP 0131 770 A1
als ein Verfahren sowie ein Werkzeug zum Feinschneiden von Werkstücken beschrieben. Dabei werden in einem ersten Verfahrensschritt die Teile aus dem zu bearbeitenden Bandmaterial nach Art einer Durchsetzung angeschnitten und in einem zweiten Verfahrensschritt fertig ausgeschnitten und stirnseitig geprägt. Dazu erfolgt in Teilbereichen der Außenschnittflächen ein Materialeindrücken in sich verjüngende und verengende Ausnehmungen einer Werkzeug zugehörigen Schnitt- und Prägeplatte.
Eine gleichartige zweistufige Verfahrens- und Werkzeugausbildung ist Gegenstand in
- DE 10 2009 029 756 A1.
Hierbei wird diesem Verfahrensschritt für die Außenkantenfertigung die Vorstufe für eine nicht näher beschriebene Zahn-Dachform-Prägung als ein unabhängiger Verfahrensschritt vorangestellt.

Eine zweistufige Verfahrens- und Werkzeugausbildung ist auch Gegenstand der gattungsbildenden EP 2982 456 A1, wobei der bearbeitete Kupplungskörper eine Zahn-Dachform-Ausbildung als Außenzähne, anstatt evolventenförmiger Außenzähne, gefertigt erhält.

Nachteilig ist an den genannten Herstellungsverfahren und der dazu benötigten Werkzeuge
- der hohe Zeit- und Kostenaufwand für die Verfahrensdurchführung sowie die benötigten Herstellungswerkzeuge, insbesondere bei großdimensionierten Blechteilen, und
- die teilweise oder vollständige Nichteinbeziehung oder Nichtrealisierbarkeit des Fertigprägens von Zahn-Dachformen und Hinterlegungen in eine komplexe spanfreie Fertigung dieser Blechteile für die Getriebesynchronisation.
Die Problemstellung zur Überwindung dieser Nachteile ist, eine kompaktere Verfahrensstruktur und Werkzeugstruktur zu finden, mit denen diese Funktionsteile spanlos und durchgängig auf einem Werkzeug kostengünstig herstellbar sind.
Diese das Verfahren zur Herstellung der Blechteile für Getriebesynchronisation betreffende Problemstellung wird durch die Merkmale des Patentanspruches 1 gelöst.
Das Verfahren besteht aus den drei Verfahrensschritten, die gleichzeitig und nacheinander stattfinden. In einem ersten Verfahrensschritt erfolgt ein Fließvorprägen von napfförmigen Vertiefungen im Bandmaterial für die später einseitig an den Außenzähnen auszubildenden Zahn-Dachformen.
Nach dem zweiten an sich bekannten Verfahrensschritt des Feinschneidens der Blechteile, wobei ein Ausschneiden und Lochen sowie Fließpressen der evolventenförmigen Außenzähne erfolgt, ist ein Fließpressen als Fertigprägen der erhabenen Zahn-Dachformen und der konischen Zahnflanken ein selbstständiger dritter Verfahrensschritt.
Ergänzende Verfahrensmerkmale sind in den Patentansprüchen 2 bis 5 benannt. Sie betreffen
- den Ablauf der Verfahrensschritte in den jeweils benachbarten Werkzeugstufen
- die Zuordnung der Verfahrensschritte Fließvorprägen und Fließpressen der Zahn-Dachformen zueinander
- die koordinierten Bewegungen von Stempeln und Ausheber.

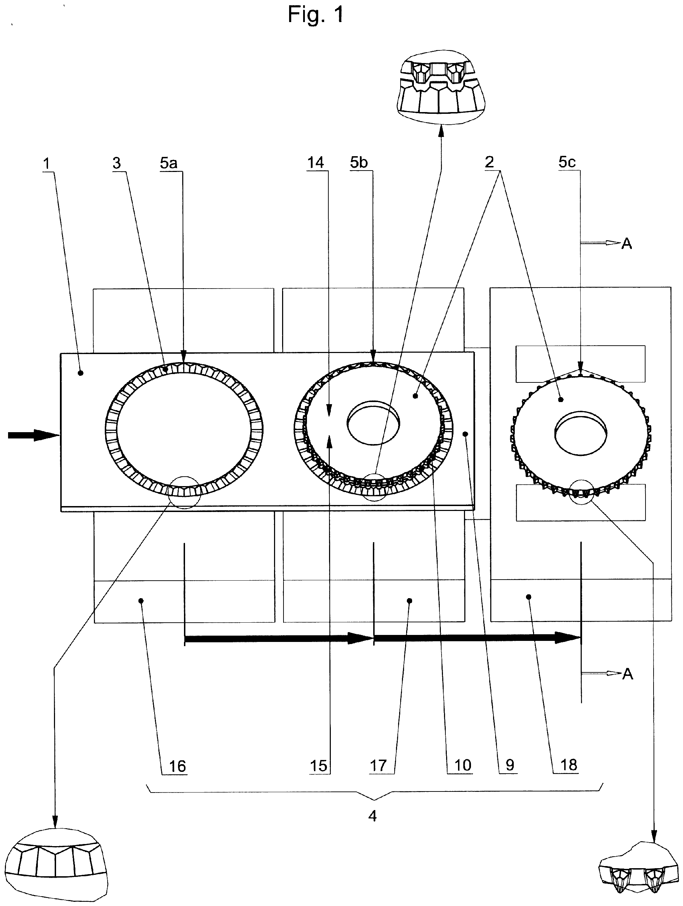

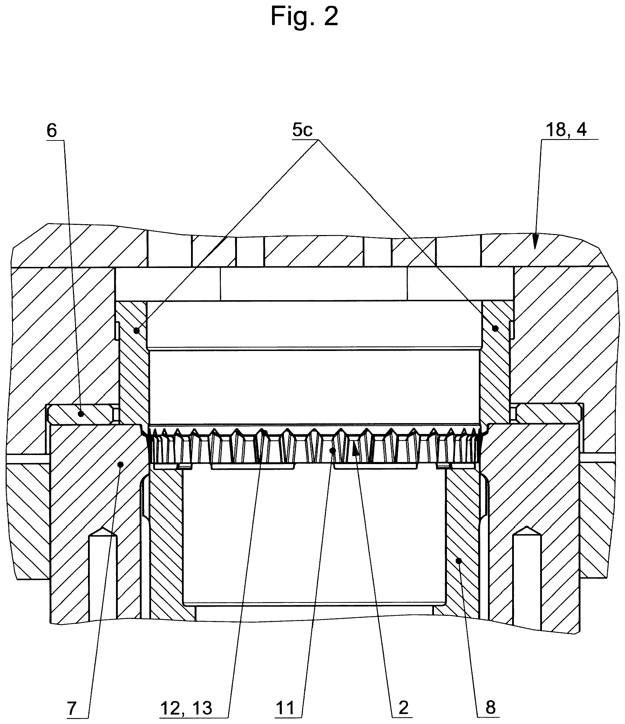

Die das Mehrstufen-Werkzeug zur Herstellung von Blechteilen für Getriebesynchronisation betreffende Problemstellung ist in Patentanspruch 6 gelöst.
In drei Werkzeugstufen eines Mehrstufen-Werkzeuges sind die Stempel, Matrizen und Ausheber für die Verfahrensschritte Fließvorprägen, Feinschneiden und Fließpressen separiert angeordnet.
Mit einem Fließ-Vorprägestempel erfolgt das Prägen von napfförmigen Vertiefungen in das Bandmaterial in der ersten Werkzeugstufe. Die so vorgeprägten napfförmigen Vertiefungen entsprechen in ihrer Ausbildung und Dimensionierung den später in der dritten Werkzeugstufe fertig geprägten erhabenen Zahn-Dachformen mit einer einheitlichen Ausbildung der Dachspitzen mit definierten Firstabrundungen.
Mit einem Prägestempel erfolgt das Fließpressen als Fertigprägen der Zahn-Dachformen und das Prägen der konischen Zahnflanken an den evolventenförmigen Außenzähnen in der dritten Werkzeugstufe. Der Prägestempel wirkt ebenso wie der Schneidstempel in der zweiten Werkzeugstufe in einer Arbeitsrichtung.
Ergänzende Ausbildungsmerkmale des Werkzeuges sind in den Patentansprüchen 7 und 8 benannt. Sie betreffen die Prägestempel für die Anordnung und die konische Ausbildung der Dachflächen an den Zahn-Dachformen sowie die Anordnung einer Trennschneideinrichtung für die verbliebenen Ränder und Zwischenstege des Bandmaterials.
Die Erfindung ist beispielhaft in den Figuren vereinfacht dargestellt und im folgenden Teil der Beschreibung näher erläutert.
Gezeigt wird in
- Fig. 1:: eine Prinzipdarstellung des gerichteten Verfahrensablaufes in einem Mehrstufen-Werkzeug als Draufsicht auf das Unterwerkzeug
- Fig. 2:: eine Schnitt-Darstellung A-A nach Fig. 1 der dritten Werkzeugstufe
Der dreistufige Verfahrensablauf wird in Fig. 1 an einem vereinfacht dargestellten Mehrstufen-Werkzeug 4 abgebildet. In das zugeführte Bandmaterial 1 werden in der ersten Werkzeugstufe 16 mittels des Fließ-Vorprägestempels 5a die napfförmigen Vertiefungen 3 voreingeprägt. Die Anordnung, die Ausbildung und die Dimensionierung dieser Vertiefung sind durch die evolventenförmigen Außenzähne 10 und die Zahn-Dachform 12 bestimmt.
Aus dem Bandmaterial 1 wird in der zweiten Werkzeugstufe 17 das Feinschneiden des Blechteiles 2 in der Kontur der evolventenförmigen Außenzähne 10 mittels des Schneidstempels 5b in Arbeitsrichtung 14 durchgeführt und das ausgeschnittene Blechteil 2 wird mittels der Ausheber 8 in Ausheberichtung 15 bewegt, in der Arbeitsposition gehalten und mittels einer Backen-Transporteinrichtung zur dritten Werkzeugstufe 18 bewegt.
In dieser Werkzeugstufe wird, wie auch in Fig. 2 gezeigt, das Blechteil 2 mittels eines Prägestempels 5c in Arbeitsrichtung 14 fertig bearbeitet, in dem die Zahn-Dachformen 12 mit den Dachspitzen mit definierten Firstabrundungen und die konischen Zahnflanken 11 an den evolventenförmigen Außenzähnen 10 fertig geprägt werden.
In der Fig. 3 sind auch die Niederhalter 6, die Matrizen 7 sowie die Ausheber 8 im Ober- und im Unterwerkzeug beispielhaft an der Werkzeugstufe 18 gezeigt.
Herstellbar sind insbesondere großdimensionierte Blechteile 2 in den Qualitätsstufe mittel und mittelgrob.

**Bezugszeichenliste**

| | | |
|---|---|---|
| 1 | Bandmaterial | |
| 2 | Blechteile | |
| 3 | napfförmige Vertiefungen | |
| 4 | Mehrstufen-Werkzeug | |
| 5a | Fließ-Vorprägestempel | |
| 5b | Schneidstempel | |
| 5c | Prägestempel | |
| 6 | Niederhalter | |
| 7 | Matrizen | |
| 8 | Ausheber | |
| 9 | Trennschneideinrichtung | |
| 10 | evolventenförmige Außenzähne | |
| 11 | konische Zahnflanken | an 10 |
| 12 | Zahndachform(en) | |
| 13 | Dachspitze mit definierten Firstabrundungen | an 12 |
| 14 | Arbeitsrichtung | von 5 und 6 |
| 15 | Ausheberichtung | von 8 |
| 16 | Werkzeugstufe | von 4 |
| 17 | Werkzeugstufe | von 4 |
| 18 | Werkzeugstufe | von 4 |

## Patentansprüche

1. Verfahren zur Herstellung von Blechteilen (2) für Getriebesynchronisation mit evolventenförmigen Außenzähnen (10), an denen stirnseitig je eine Zahn-Dachform (12) auszubilden ist und die als großdimensionierte Synchronringe, Kupplungskörper oder Kupplungsscheiben in mittlerer oder mittelgrober Qualität ihrer Anwendung finden, mit einer geringen Anzahl Verfahrensschritte, wobei das zu bearbeitende Bandmaterial (1) zwischen den Niederhaltern (6) am Oberwerkzeug und am Unterwerkzeug eines Mehrstufen-Werkzeuges (4) geklemmt ist, **dadurch gekennzeichnet, dass** in einem ersten Verfahrensschritt ein Fließvorprägen von napfförmigen Vertiefungen (3) im Bandmaterial (1) für die spätere einseitig an den Außenzähnen (10) auszubildenden Zahn-Dachformen (12),
dass in einem zweiten Verfahrensschritt ein Feinschneiden der Blechteile (2) als Ausschneiden und Lochen sowie ein Fließpressen der evolventenförmigen Außenzähne (10) und
dass als ein selbstständiger dritter Verfahrensschritt ein Fließpressen als Fertigprägen der erhabenen Zahn-Dachformen (12) und der konischen Zahnflanken (11) gleichzeitig stattfinden.

2. Verfahren zur Herstellung von Blechteilen (2) für Getriebesynchronisation nach Patentanspruch 1, **dadurch gekennzeichnet,**
**dass** die drei Verfahrensschritte
- Fließvorprägen an einem ersten Blechteil (2),
- Feinschneiden an einem zweiten Blechteil (2) und
- Fertigprägen an einem dritten Blechteil (2)
gleichzeitig auf drei benachbarten Werkzeugstufen (16,17 und 18) des Mehrstufen-Werkzeuges (4) ablaufen.

3. Verfahren zur Herstellung von Blechteilen (2) für Getriebesynchronisation nach Patentanspruch 1 und 2, **dadurch gekennzeichnet,**
**dass** nach der gleichzeitigen Beendigung der drei Verfahrensschritte das mittels einer Zuführungseinrichtung bewegliche Bandmaterial (1), dessen Ränder und Zwischenstege als Haltegitter für die herzustellenden Blechteile (2) fungieren, unterstützt durch eine Blechteilejustierung zwischen den jeweils benachbarten Werkzeugstufen (16 und 17 sowie 17 und 18) getaktet bewegt, positioniert und justiert ist.

4. Verfahren zur Herstellung von Blechteilen (2) für Getriebesynchronisation nach Patentanspruch 1 bis 3, **dadurch gekennzeichnet,**
**dass** die mit dem ersten Verfahrensschritt Fließvorprägen in das Blechteil (2) eingebrachten napfförmigen Vertiefungen (3), in ihrer Ausbildung und Dimensionierung den mit dem dritten Verfahrensschritt Fließpressen dazwischen angeordneten fertig geprägten Zahn-Dachformen (12) an einem Synchronring, an einem Kupplungskörper oder an einer Kupplungsscheibe entsprechen.

5. Verfahren zur Herstellung von Blechteilen (2) für Getriebesynchronisation nach den Anspruch 1 bis 4, **dadurch gekennzeichnet,**
**dass** zum Bandmaterial (1) hingerichtet, die Stempel (5a, 5b, 5c) von oben nach unten in Arbeitsrichtung (14) und die Ausheber (8) von unten nach oben in Ausheberichtung (15) gleichzeitig bewegt und geführt sind und sich im Bereich der napfförmigen Vertiefungen (3) treffen.

6. Mehrstufen-Werkzeug (4) zur Herstellung von Blechteilen (2) für Getriebesynchronisation mit evolventenförmigen Außenzähnen (10), an denen stirnseitig je eine Zahn-Dachform (12) auszubilden ist und die als Synchronringe, Kupplungskörper oder Kupplungsscheiben ihre Anwendung finden, wobei das mit einer geringen Anzahl Werkzeugstufen zu bearbeitende Bandmaterial (1) zwischen den Niederhaltern am Oberwerkzeug und am Unterwerkzeug des Mehrstufen-Werkzeuges (4) geklemmt ist, für die Durchführung des Verfahrens nach Patentanspruch 1 bis 5, **dadurch gekennzeichnet,**
**dass** in drei aneinander gereihten Werkzeugstufen (16,17 und 18) des Mehrstufen-Werkzeuges (4) separiert die Stempel, die Matrizen (7) und die Ausheber (8) für die Verfahrensschritte Fließvorprägen, Feinschneiden und Fließpressen angeordnet sind, dass ein Fließ-Vorprägestempel (5a) zum Prägen von napfförmigen Vertiefungen (3) in das Bandmaterial (1) in der ersten Werkzeugstufe (16) vorgesehen ist, wobei die so vorgeprägten napfförmigen Vertiefungen (3) in ihrer Ausbildung und Dimensionierung den später in der Werkzeugstufe (18) fertig geprägten erhabenen Zahn-Dachformen (12) mit einer einheitlichen Ausbildung der Dachspitzen (13) mit definierten Firstabrundungen entsprechen, und dass ein Prägestempel (5c) zum Fließpressen für das Fertigprägen der Zahn-Dachformen (12) sowie das Prägen der konischen Zahnflanken (11) an den evolventenförmigen Außenzähnen (10) in der dritten Werkzeugstufe (18) vorgesehen ist, der ebenso wie ein in der zweiten Werkzeugstufe (17) angeordnete Schneidstempel (5b) in einer Arbeitsrichtung (14) wirkt.

7. Mehrstufen-Werkzeug (4) zur Herstellung von Blechteilen für Getriebesynchronisation nach Patentanspruch 6, **dadurch gekennzeichnet,**
**dass** der Prägestempel (5c) in der Werkzeugstufe (18) so angeordnet ist, dass die Zahn-Dachform (12) der in ein Blechteil (2) geprägten evolventenförmigen Außenzähne (10) konisch ausgebildete gegenüberliegende Dachflächen hat, wobei sie in einem gleichen oder einem unterschiedlichen Konuswinkel angeordnet sind.

8. Mehrstufen-Werkzeug (4) zur Herstellung von Blechteilen für Getriebesynchronisation nach den Patentansprüchen 6 und 7, **dadurch gekennzeichnet, dass** nach der zweiten Werkzeugstufe (17) quer gerichtet zur Bewegungsrichtung des Bandmateriales (1) eine Trennschneideinrichtung (9), beispielsweise am Unterwerkzeug des Mehrstufen-Werkzeuges (4), für das Abtrennen der nach dem Ausschneiden der Blechteile (2) aus dem Bandmaterial (1) von diesem verbliebene Ränder und Zwischenstege, angeordnet ist.

## Claims

1. Method for the manufacture, with a minimum number of process steps, of metal components (2) for gear synchronisation with involute-form outer teeth (10) on the face side of which a tooth roof form (12) is to be shaped each and which are used as large-dimensioned baulk rings, clutch bodies, or clutch disks in medium and medium-coarse quality, where the strip material to be processed (1) is clamped between holding down clamps (6) at the upper tool and the lower tool of a multi-stage tool (4), **characterised in**
**That** simultaneously take place a flow pre-forming of cup-shaped sections (3) in the strip material (1) for the tooth roof forms (12) to be built later at one side of the outer teeth (10) in a first process step, and
**That** a fine blanking as cutting-out and punching of the metal components (2) as well as a cold forging of the involute-form outer teeth (10) take place in a second process step, and
**That** a cold forging as finish forming of the embossed tooth roof forms (12) and the conical tooth flanks (11) takes place as an independent, third process step.

2. Method for the manufacture of metal components (2) for gear synchronisation according to patent claim 1, **characterised in:**
**That** the tree process steps
- Flow pre-forming at a first metal component (2)
- Fine blanking at a second metal component (2), and
- Finish flow forming at a third metal component (2)
are simultaneously running on three adjacent tool stages (16, 17, and 18) of the multi-stage tool (4).

3. Method for the manufacture of metal components (2) for gear synchronisation according to patent claims 1 and 2, **characterised in:**
**That**, on simultaneous completion of the three process steps, the feeder-moved strip material (1) the edges and intermediate lands of which act as retaining grid for the metal components (2) to be produced is, supported by a metal component alignment, synchronised, positioned, and adjusted between any of the adjacent tool stages (16 and 17 as well as 17 and 18).

4. Method for the manufacture of metal components (2) for gear synchronisation according to patent claims 1 thru 3, **characterised in:**
**That** the cup-shaped sections (3) put into the metal component (2) through the first process step 'flow pre-forming' (3) conform, in terms of their formation and dimensioning, to the tooth roof forms (12) arranged in-between and finish-formed in the third process step 'flow cold forging' at a baulk ring, at a clutch body or at a clutch disk.

5. Method for the manufacture of metal components (2) for gear synchronisation according to patent claims 1 thru 4, **characterised in:**
**That**, directed towards the strip material (1), the dies (5a, 5b, 5c) are simultaneously moved and guided top down in working direction (14) and the ejectors (8) bottom-up in ejection direction (15) and meet in the area of the cap-shaped sections (3).

6. Multi-stage tool (4) for the manufacture of metal components (2) for gear synchronisation with involute-form outer teeth (10) on the face side of which a tooth roof form (12) is to be shaped each and which are used as baulk rings, clutch bodies, or clutch disks, with a little number of tool stages, where the strip material to be processed (1) is clamped between holding down clamps at the upper tool and the lower tool of the multi-stage tool (4), to realise a method according to patent claim 1 thru 5, **characterised in**
**That** the dies, the moulds (7), and the ejectors (8) are separately arranged in three tool stages (16, 17, and 18) placed next to each other of the multi-stage tool (4) for the process steps flow pre-forming, fine blanking, and cold forging,
**That** a pre-forming die (5a) to stamp the cup-shaped sections (3) into the strip material (1) is provided in the first tool stage (16), the cup-shaped sections (3) pre-formed in this way conforming to the tooth roof forms (12) in terms of formation and dimensioning, with a uniform development of the tooth tips (13) with defined, rounded roof ridges, finish-formed later in tool stage (18), and
**That** a cold forging forming die (5c) is provided for the finish forming of the tooth-roof forms (12) as well as the forming of the conical tooth flanks (11) at the involute form outer teeth (10) in the third tool stage (18) which, the same as a cutting die (5b) arranged in the second tool stage (17), act in one working direction (14).

7. Multi-stage tool (4) for the manufacture of metal components for gear synchronisation according to patent claim 6, **characterised in:**
**That** the forming die (5c) in tool stage (18) is arranged so that the tooth roof form (12) of the involute form outer teeth stamped in a metal sheet part (2) has opposed conical roof lands arranged in both, a same and a different cone angle.

8. Multi-stage tool (4) for the manufacture of metal components for gear synchronisation according to patent claims 6 and 7, **characterised in:**
**That**, after the second tool stage (17), a parting device (9) is arranged transversally to the strip material's (1) direction of motion, for example at the lower tool of the multi-stage tool (4), to cut off the edges and bridges remaining after cutting out the metal components (2) from the strip material (1).

## Revendications

1. Procédé destiné à fabriquer, avec un petit nombre d'étapes, des pièces en tôle (2) pour la synchronisation de boîtes de vitesses, avec des dents extérieures à développante (10) à la face frontale desquelles une forme de toit de dent (12) est à développer et qui trouvent leur utilisation en tant que bagues synchro, corps d'embrayage ou disques d'embrayage aux dimensions élevées en qualité moyenne ou moitié grosse, où le feuillard (1) à traiter est serré entre des serre-flan (6) sur l'outil supérieur et sur l'outil inférieur d'un outil à plusieurs étages, **caractérisé en ce**
**Qu'**auront lieu simultanément un pré-estampage par fluage de creux en forme de godet (3) dans le feuillard (1) pour les formes de toit de dent (12) à développer plus tard sur un côté des dents extérieurs (10) dans une première étape, et
**Qu'**un découpage fin des pièces en tôle (2) comme découpe et poinçonnage ainsi qu'un estampage par fluage des dents extérieures à développante (10) auront lieu dans une deuxième étape, et
**Qu'**un estampage par fluage comme estampage de finition des formes de toit de dent (12) en relief et des flancs de dent coniques a lieu comme une troisième étape indépendante.

2. Procédé destiné à fabriquer des pièces en tôle (2) pour la synchronisation de boîtes de vitesses selon la revendication 1, **caractérisé en ce**
**Que** les trois étapes
- Pré-estampage par fluage sur une première pièce de tôle (2),
- Découpage fin sur une deuxième pièce de tôle (2) et
- Estampage de finition par fluage sur une troisième pièce de tôle (2)
ont lieu simultanément sur trois étapes d'outil adjacentes (16, 17 et 18) de l'outil à plusieurs étages (4).

3. Procédé destiné à fabriquer des pièces en tôle (2) pour la synchronisation de boîtes de vitesses selon les revendications 1 et 2, **caractérisé en ce Que**, après la terminaison simultanée des trois étapes, le feuillard (1) déplacé au moyen d'un dispositif d'alimentation et dont les bords et les nervures intermédiaires servent de grille de retenue pour les pièces en tôle (2) à fabriquer, est, appuyé par un ajustage des pièces en tôle, transporté , positionné et ajusté de façon synchronisée entre les étages voisins de l'outil (16 et 17 ainsi que 17 et 18).

4. Procédé destiné à fabriquer des pièces en tôle (2) pour la synchronisation de boîtes de vitesses selon les revendications 1 à 3, **caractérisé en ce**
**Que** les creux (3) en forme de godet produits dans la pièce de tôle (2) lors de la première étape pré-estampage par fluage correspondent, concernant leur développement et dimensionnement, aux formes de toit de dent (12) estampées définitivement lors de la troisième étape estampage par fluage arrangées entre eux, sur une bague synchro, un corps d'embrayage ou un disque d'embrayage.

5. Procédé destiné à fabriquer des pièces en tôle (2) pour la synchronisation de boîtes de vitesses selon les revendications 1 à 4, **caractérisée en ce**
**Que**, dirigés vers le feuillard (1), les poinçons (5a, 5b, 5c) sont déplacés et guidés simultanément de haut en bas dans la direction de travail 814) et les éjecteurs (8) de bas en haut dans la direction d'éjection (15), se rejoignant dans la zone des creux en forme de godets (3).

6. Outil à plusieurs étages (4) destiné à fabriquer des pièces en tôle (2) pour la synchronisation de boîtes de vitesses, avec des dents extérieures à développante (10) à la face frontale desquelles une forme de toit de dent (12) est à développer chaque fois et qui trouvent leur utilisation en tant que bagues synchro, corps d'embrayage ou disques d'embrayage, où le feuillard (1) à traiter avec un petit nombre d'étages d'outil est serré entre des serre-flans (6) sur l'outil supérieur et sur l'outil inférieur de l'outil à plusieurs étages, pour la réalisation d'un procédé selon les revendications 1 à 5, **caractérisé en ce Que** les poinçons, les matrices (7) et les éjecteurs (8) sont arrangés de façon séparée dans les trois étages d'outil juxtaposés (16, 17 et 18) de l'outil à plusieurs étages, pour les étapes pré-estampage par fluage, découpage fin et estampage par fluage,
Qu'un poinçon de pré-estampage par fluage (5a) pour estamper des creux en forme de godet (3) dans le feuillard (1) est prévu dans la première étage d'outil (16), les creux en forme de godet (3) ainsi pré-estampés correspondant, en leur développement et dimensionnement, aux formes de toit de dent (12) en relief avec un développement uniforme des pointes de toit (13) avec des arrondis définis de crête estampées définitivement plus tard dans l'étage d'outil (18), et
Qu'un poinçon (5c) est prévu pour l'estampage par fluage des formes de toit de dent (12) ainsi que pour l'estampage des flanc de dent coniques (11) sur les dents extérieures à développante (10) dans le troisième étage d'outil (18) qui, tout comme un poinçon de découpage (5b) arrangé dans le deuxième étage d'outil (17), agit dans une direction de travail (14).

7. Outil à plusieurs étages (4) destiné à fabriquer des pièces en tôle pour la synchronisation de boîtes de vitesses selon la revendication 6, **caractérisée en ce**
**Que** le poinçon d'estampage (5c) dans l'étage d'outil (18) est arrangé de sorte que la forme de toit de dent (12) des dents extérieurs à développante (10) estampée dans une pièce de tôle (2) a des surfaces opposées de forme conique étant arrangées dans un angle conique soit identique soit différent.

8. Outil à plusieurs étages (4) destiné à fabriquer des pièces en tôle pour la synchronisation de boîtes de vitesses selon les revendications 6 et 7, **caractérisée en ce**
**Qu'**un dispositif de cisaillement (9) est arrangé transversalement à la direction de transport du feuillard (1) après le deuxième étage d'outil (17), par exemple sur l'outil inférieur d'un outil à plusieurs étages (4), pour découper les bords et nervures intermédiaires restant du feuillard (1) après la découpe des pièces en tôle (2).
